# EUROPÄISCHE PATENTANMELDUNG

(11) **EP 4 173 978 A1**
(43) Veröffentlichungstag der Anmeldung: **03.05.2023**
(21) Anmeldenummer: 21205024.9
(22) Anmeldetag: 27.10.2021
(51) Int. Cl.: B65B 29/02, A47J 31/36, B26F 1/44, B29C 65/00, B65B 51/22, B65B 61/06

(54) **VERFAHREN UND VORRICHTUNG ZUR HERSTELLUNG EINER PORTIONENKAPSEL**

(71) Anmelder: Tchibo GmbH, 22297 Hamburg (DE)
(72) Erfinder: WICHE, Marius-Konstantin, 22763 Hamburg (DE)
(74) Vertreter: Frei Patent Attorneys

(57) **Zusammenfassung**

Beim Verfahren zum Herstellen einer mit einem Extraktionsgut gefüllten Portionenkapsel für die Herstellung eines Brüherzeugnisses wird zunächst ein Grundkörper aus einem Kunststoff, mit einem Bodenbereich, einer umlaufenden Seitenwand und einem an die umlaufende Seitenwand anschliessenden umlaufenden Grundkörper-Kragen (41) befüllt. Anschliessend wird ein Kunststoff-Deckel platziert, so dass ein Deckel-Kragen (34) auf dem Grundkörper-Kragen aufliegt, und der Deckel-Kragen wird am Kunststoff-Kragen befestigt, bspw. durch Ultraschallschweissen. Dann wird eine äussere Partie des so entstandenen Kapsel-Kragens (4) abgetrennt. Das Abtrennen der äusseren Partie geschieht dabei unter Verwendung eines Abtrennwerkzeugs (61) mit entlang des Kapsel-Kragens umlaufender Klinge (62) mit Schneidekante (63). Die verwendete Klinge (62) weist einen ersten Bereich aus einem ersten Material sowie einen zweiten Bereich aus einem zweiten Material auf, wobei der erste Bereich die Schneidekante (63) bildet, und, wobei das erste Material härter ist als das zweite Material.

## Beschreibung

Die Erfindung betrifft die Zubereitung von Getränken oder dergleichen aus einem in einer Kapsel enthaltenen Extraktionsgut, beispielsweise gemahlenem Kaffee. Sie betrifft insbesondere eine Portionenkapsel.

Extraktionsgeräte zum Zubereiten von Getränken aus einem in einer Portionsverpackung vorhandenen Extraktionsgut sind beispielsweise als Kaffee-, Espresso- oder auch Teemaschinen bekannt. In vielen entsprechenden Systemen sind die Portionsverpackungen als Kapseln ausgebildet, in denen das Extraktionsgut bspw. luftdicht abgeschlossen ist. Für die Extraktion wird die Kapsel an zwei einander gegenüberliegenden Seiten angestochen. Auf der ersten Seite wird, im Allgemeinen heisses, Wasser eingeleitet. Auf der zweiten Seite wird das Brüherzeugnis aus der Kapsel ausgeleitet. Je nach zuzubereitendem Getränk und System muss dabei im Innern der Kapsel ein recht erheblicher Druck herrschen.

Als Kapselmaterialien sind insbesondere Aluminium und Kunststoffe, bspw. Polypropylen bekannt geworden. Aluminiumkapseln sind jedoch in der Herstellung sehr energieaufwändig. Polypropylenkapseln sind betreffend Energieaufwand und Entsorgung vorteilhaft, stellen aber erhöhte Anforderungen an den Anstechmechanismus und den Aromaschutz. Als Kapselmaterialien sind auch sogenannte Bio-Kunststoffe diskutiert worden. Als solche werden einerseits Kunststoffe bezeichnet, die aus einem nachwachsenden Rohstoff gefertigt sind (sogenannte biobasierte Kunststoffe). Anderseits sind Bio-Kunststoffe Kunststoffe, die biologisch abbaubar sind (sogenannt bioabbaubare Kunststoffe). Die für die Herstellung von Portionenkapseln vorgeschlagenen Kunststoffe sind bioabbaubar und beinhalten teilweise einen Anteil von biobasierten Kunststoffen. Im vorliegenden Text bedeutet "bioabbaubar" biologisch abbaubar gemäss der Norm EN13432 (Stand: Ende 2020), und "biobasiert" bedeutet "aus nachwachsenden Rohstoffen, nicht auf fossiler Basis gefertigt".

Aus der WO 2010/118543 und der WO 2015/096990 ist eine Kaffee-Portionenkapsel bekannt, welche näherungsweise eine Würfelform aufweist und aus Kunststoff gefertigt ist. Im Unterschied zu den bekannten becherförmigen Kapseln weist diese einen gewölbten und nicht einen flachen Deckel auf, und entsprechend auch keinen auf der Ebene der einen (oberseitigen) Deckfläche umlaufenden Kragen. Ein solcher Kragen wird gemäss dem Stand der Technik beim Verschliessen mittels Ultraschallschweissen benötigt, um einen Energierichtungsgeber unterzubringen. Die gemäss der Lehre der WO 2010/118543 hergestellte Kapsel hat unabhängig von ihrer ("Würfel"-) Form eine zwischen den durch die Deckfläche definierten Ebenen umlaufende, einen nur minimalen Kragen bildende Schweissbraue, deren Ausdehnung/seitliches Vorstehen jedoch im Vergleich zum Kragen bekannter Kapseln deutlich reduziert ist. Für die der Herstellung wird zunächst ein breiterer Kragen erstellt, entlang welchem verschweisst wird, woraufhin ein äusserer Bereich des Kragens abgetrennt wird.

Bei Kunststoff-Kapseln gemäss WO 2010/118543 und WO 2015/096990 und auch bei anderen Kapseln mit einem verhältnismässig kleinen Kragen muss demnach ein Arbeitsschritt bereitgestellt werden, in welchem der äussere Bereich des Kragens abgetrennt wird. Herkömmliche Stanzwerkzeuge haben jedoch das Problem, dass sie sich relativ rasch abnutzen, da das Kunststoffmaterial vergleichsweise zäh und der Kragen vergleichsweise dick ist. In WO 2010/118543 und WO 2015/096990 wird für das Abtrennen auch das Ultraschall-Trennschweissverfahren vorgeschlagen. Auch bei diesem ergeben sich jedoch Herausforderungen in Bezug auf die Komplexität der verwendeten Werkzeuge und deren Abnutzung.

Es ist eine Aufgabe der vorliegenden Erfindung, ein Verfahren zum Herstellen von Kapseln, beispielsweise der in WO 2010/118543 und WO 2015/096990 beschriebenen Art, so weiterzuentwickeln, dass Nachteile des Standes der Technik überwunden werden und dass insbesondere der Herstellungsaufwand gesenkt wird. Eine weitere Aufgabe ist, eine entsprechende Einrichtung zur Verfügung zu stellen.

Diese Aufgabe wird gelöst durch die Erfindung, wie sie in den Patentansprüchen definiert ist.

Beim Verfahren zum Herstellen einer mit einem Extraktionsgut gefüllten Portionenkapsel für die Herstellung eines Brüherzeugnisses wird zunächst ein Grundkörper aus einem Kunststoff, mit einem Bodenbereich, einer umlaufenden Seitenwand und einem an die umlaufende Seitenwand anschliessenden umlaufenden Grundkörper-Kragen befüllt. Anschliessend wird ein Kunststoff-Deckel (insbesondere aus demselben Kunststoff wie der Grundkörper) platziert, so dass ein Deckel-Kragen auf dem Grundkörper-Kragen aufliegt, und der Deckel-Kragen wird am Kunststoff-Kragen befestigt, bspw. durch Ultraschallschweissen. Dann wird eine äussere Partie des so entstandenen Kapsel-Kragens abgetrennt. Das Abtrennen der äusseren Partie geschieht dabei unter Verwendung eines Abtrennwerkzeugs mit entlang des Kapsel-Kragens umlaufender Klinge mit Schneidekante. Die verwendete Klinge weist einen ersten Bereich aus einem ersten Material sowie einen zweiten Bereich aus einem zweiten Material auf, wobei sich der erste Bereich bis zur Schneidekante erstreckt., und, wobei das erste Material härter ist als das zweite Material.

Der Umstand, dass sich der erste Bereich bis zur Schneidekante erstreckt, kann bedeuten, dass dieser insbesondere die Schneidekante bildet in dem Sinn, dass er sich bis ganz zuäusserst an die Schneidekante erstreckt, während mindestens nach den ersten Abtrennvorgängen der zweite Bereich im Vergleich zum ersten Bereich leicht zurückversetzt sein wird, wenn auch unter Umständen, je nach Dicke des ersten Bereichs, nur um eine mikroskopisch kleine Distanz.

Es hat sich gezeigt, dass auf diese Weise der Abtrennvorgang effizienter gemacht werden kann, weil die Klinge des Abtrennwerkzeugs weniger oft ausgewechselt werden muss. Wenn Material der Klinge an der Schneidkante abgetragen wird, geschieht in unmittelbarer Nähe zur Schneidkante auch ein Abtrag im zweiten Bereich, und zwar aufgrund der geringeren Härte tendenziell stärker, so dass die eigentliche Schneidkante (ganz zuäusserst) stets aus dem ersten Material besteht. Daraus ergibt sich ein selbstschärfender Effekt: die Klinge wird nie so stumpf wie wenn sie über ihre gesamte Dicke gleichmässig abgetragen würde. Ein selbstschärfender Effekt wurde für Messer aus zwei unterschiedlich harten Materialien bereits angedacht, indem die Messer bei ihrem Gebrauch gleichzeitig auch geschliffen werden, bspw. durch Bewegung relativ zu einem Schneidbrett. Es hat sich nun gezeigt, dass bei einer umlaufenden Klinge, bei welcher eine konventionelle Schneidbewegung nicht möglich ist, ebenfalls ein selbstschärfender Effekt erzielbar ist.

Der erste Bereich ist zu diesem Zweck insbesondere relativ dünn (die Dicke bezeichnet dabei die Ausdehnung senkrecht Richtung der Relativbewegung von Abtrennwerkzeug und Gegenstück (bspw. Abtrenn-Sonotrode, siehe unten) und senkrecht zum Verlauf der Schneidekante, d.h. die Ausdehnung senkrecht zur Klingenfläche). Die Dicke des ersten Bereichs beträgt bspw. nicht mehr als 40 µm, insbesondere nicht mehr als 30 µm, nicht mehr als 20 µm oder nicht mehr al 10 µm.

Der erste Bereich kann daher eine Beschichtung des zweiten Bereichs sein. Auch wenn der erste Bereich auf andere Art als durch Beschichten erzeugt wurde, erstrecken sich der erste und der zweite Bereich entlang der Klingenebene bis hin zur Schneidekante bzw. nahe an diese heran, bspw. bis auf höchstens 1mm oder höchstens 0.3 mm.

Verfahren zum Auftragen des ersten Bereichs als Beschichtung können bspw. Spray-Coating, Tauchen und/oder Laserauftrag (Laser Cladding; mit Zusatzwerkstoff insbesondere in Pulverform (voraufgetragen oder mit 'powder feed' zugeführt), eventuell auch in Drahtform) beinhalten. Mögliche Materialien für einen als Beschichtung ausgeführten ersten Bereich sind Diamantpulver, Diamond-like Carbon (DLC), Eisenoxid, Titanoxid, Keramiken, bspw. polykristalline Keramiken, etc.

Besonders günstig ist das erfindungsgemässe Vorgehen, wenn das Abtrennwerkzeug als Abtrenn-Amboss ausgebildet ist, welcher die Klinge aufweist und den Kapsel-Kragen während des Abtrennens stützt. Als Gegenstück beim Abtrennvorgang dient insbesondere eine während des Abtrennvorgangs vibrierende Sonotrode, insbesondere Ultraschallsonotrode. Diese kann eine ebene Auskoppelfläche aufweisen, welche beim Abtrennvorgang den Kapselkragen vibrierend gegen die Klinge des Abtrennwerkzeugs drückt.

Während des Abtrennvorgangs kann der Abtrenn-Amboss insbesondere ruhen (dann wird die Sonotrode nach unten bewegt während des Vorgangs) oder allenfalls einer lineare Bewegung nach oben zur Abtrennsonotrode hin unterworfen sein. Jedenfalls wird der Abtrenn-Amboss nicht vibrieren und ist bei solchen Ausführungsformen die Abtrennsonotrode als das Gegenstück dasjenige Element, welches aktiv ist und auch die nötige Energie einkoppelt - trotzdem ergibt sich der beschriebene selbstschärfende Effekt.

Das Verfahren kann so durchgeführt werden - und die Einrichtung zu dessen Durchführung entsprechend eingerichtet sein, dass ausgeschlossen ist, dass sich die Schneidkante und das Gegenstück zum Abtrennwerkzeug (das Gegenstück kann insbesondere eine Abtrennsonotrode sein) nie ganz berühren können. in diesen Ausführungsformen gibt es keine besonderen Anforderungen an die Härte der der Schneidekante zugewandten Oberfläche des Gegenstücks. Diese kann bspw. ähnlich der Härte des zweiten Bereichs sein; optional kann das Gegenstück aus demselben Material gefertigt sein wie der zweite Bereich. In anderen Ausführungsformen, in denen die Schneidekante die Oberfläche berühren kann, dann vorgesehen sein, dass die der Schneidekante zugewandte Oberfläche noch härter ist als der erste Bereich. Durch diese Massnahme wird der selbstschärfende Effekt akzentuiert und die Lebensdauer, namentlich auch des Gegenstücks, positiv beeinflusst.

Das Befestigen des Deckel-Kragens am Grundkörper-Kragen kann durch Ultraschallschweissen geschehen. Dabei kann dieselbe Ultraschall erzeugende Maschine verwendet werden wie für den anschliessenden Abtrennvorgang oder eine andere. In beiden Fällen kann insbesondere der Amboss, in welchem die Kapsel während des jeweiligen Vorgangs gestützt und geführt wird, ein anderer sein, d.h. der Schweiss-Amboss weist dann keine Klinge auf, sondern bspw. eine ebene Stützfläche.

Beim Vorgang des Verschweissens drückt die Schweiss-Sonotrode den Deckelkragen vibrierend gegen den vom Schweiss-Amboss gestützten Grundkörper-Kragen. Der Deckel oder der Grundkörper weist dabei einen Energierichtungsgeber auf, der bspw. als umlaufende feine Rippe ausgestaltet sein kann. Die Schweiss-Sonotrode bzw. der Schweiss-Amboss kann dabei eine entsprechende Energierichtungsgeber-Rippe aufweisen, insbesondere wenn der Deckel bzw. der Grundkörper eine mehr oder weniger konstante Dicke aufweist, wie das der Fall ist, wenn er durch Tiefziehen hergestellt ist.

Die Formen des Abtrenn-Ambosses, des Gegenstücks (insbesondere Abtrenn-Sonotrode), und gegebenenfalls des Schweiss-Ambosses und der Schweiss-Sonotrode sind auf die herzustellende Kapsel abgestimmt. Insbesondere kann in Ausführungsformen die Schneidekante der Klinge eine auf einer horizontalen Ebene umlaufende geschlossene Kontur bilden. Diese geschlossene Kontur kann in Ausführungsformen rechteckig mit abgerundeten Ecken sein. Auch kreisförmige Konturen sind jedoch möglich, falls eine entsprechende Kapsel hergestellt werden soll.

Der Grundkörper und/oder der Deckel der Kapsel kann/können durch Tiefziehen hergestellt sein.

Grundkörper und/oder Deckel kann aus Polypropylen gefertigt sein, oder alternativ aus einem anderen Kunststoff, insbesondere aus einem Bio-Kunststoff.

Nebst einem Verfahren betrifft die vorliegende Erfindung auch eine Einrichtung zur Durchführung des Verfahrens, wobei die Vorrichtung die Mittel aufweist, das Verfahren durchzuführen, also insbesondere das Abtrennwerkzeug mit der Klinge, welche die im vorliegenden Text beschriebenen Eigenschaften aufweist. Die Einrichtung kann ausserdem eine Befüllvorrichtung und/oder eine Schweissvorrichtung aufweisen. Auch andere in diesem Text beschriebene Merkmale der verwendeten Werkzeuge oder Hilfsmittel sind optionale Merkmale der Einrichtung.

Die in diesem Text verglichenen Härten sind, soweit definiert, Rockwell-Härten nach Skala C (HRC-Prüfverfahren). Ergänzend oder alternativ (auch für Materialien, deren Rockwell-Härte nicht genügend definiert ist) gelten alle gemachten Angaben auch für die absolute Härte nach Rosiwal, welche das Verhalten bei einer Beschleifung charakterisiert. Auch die Mohs-Härteskala kann verwendbar sein; bspw. kann vorgesehen sein, dass der erste Bereich eine Mohs-Härte von mindestens 5 aufweist.

Ausführungsbeispiele der Erfindung werden nachfolgend anhand von Zeichnungen beschrieben. In den Zeichnungen bezeichnen gleiche Bezugszeichen gleiche oder analoge Elemente. Die Zeichnungen sind nicht massstäblich und zeigen teilweise einander entsprechende Elemente in von Figur zu Figur unterschiedlichen Grössen. Es zeigen:
- Fig. 1 eine mit dem erfindungsgemässen Verfahren herstellbare Kapsel;
- Fig. 2 einen Grundkörper für eine Kapsel nach Fig. 1;
- Fig. 3 ein erstes Beispiel eines Deckels;
- Fig. 4, ein zweites Beispiel eines Deckels, teilweise angeschnitten dargestellt;
- Fig. 5 eine Schnittdarstellung eines Details der Kapsel mit Grundkörper und Deckel während des Schweissvorgangs;
- Fig. 6 einen Abtrenn-Amboss;
- Fig. 7 eine Schnittdarstellung eines Details der Kapsel mit Grundkörper und Deckel während des Abtrennvorgangs;
- Fig. 8 eine Klinge des Abtrenn-Ambosses;
- Fig. 9 eine schematische Illustration des selbstschärfenden Effekts;
- Fig. 10 eine alternative Klinge eines Abtrenn-Ambosses;
- Fig. 11 eine Schnittdarstellung einer alternativen Kapsel.

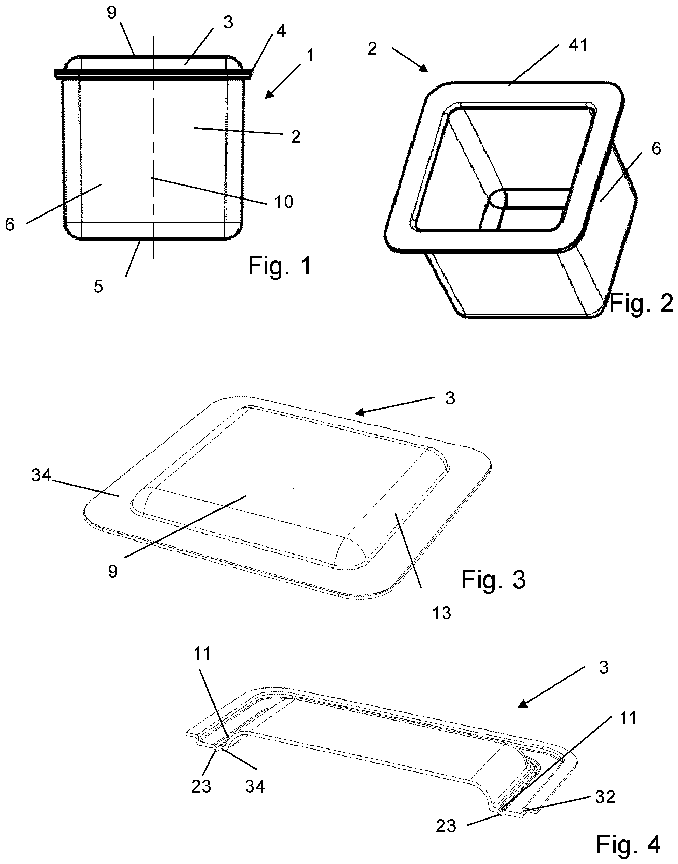

Die Kapsel 1 gemäss **Figur 1** hat im Wesentlichen die Form eines Würfels mit gerundeten Kanten. Die Ausdehnung nimmt jedoch zur oben liegenden Seite hin leicht zu, so dass die Kapsel streng mathematisch gesehen eine Pyramidenstumpfform hat.

Die Kapsel weist einen Grundkörper (oder Becher) 2 und einen entlang eines umlaufenden Kragens 4 daran befestigten Deckel 3 auf. Der Grundkörper 2 bildet einen Kapselboden 5 und eine umlaufende Seitenwand 6, welche an ihrem in Bezug auf axiale Richtungen (Achse 10) äusseren, in Fig. 1 oberen, Ende durch den Kragen 4 abgeschlossen wird. Der Deckel ist nach aussen gewölbt, indem die zum Kapselboden 5 im Wesentlichen parallele Deckelfläche 9 im Vergleich zum umlaufenden Kragen 4 nach aussen versetzt ist.

**Figur 2** zeigt den Grundkörper 2 (Becher) vor der Befüllung und vor dem Verschliessen. Der Grundkörper-Kragen 41 weist eine Ausdehnung auf, welche grösser ist als diejenige des Kragens 4 der fertigen Kapsel.

Bei der Kapselherstellung wird zunächst der Grundkörper 2 mit dem Extraktionsgut befüllt, und anschliessend wird der Deckel 3 positioniert. **Figuren 3 und 4** zeigen je ein Ausführungsbeispiel eines Deckels 3, der durch Tiefziehen hergestellt ist, wobei die Ausführungsform gemäss Fig. 4 angeschnitten dargestellt ist.

In der Ausgestaltung gemäss Fig. 4 weist der Deckel einen Energierichtungsgeber 23 auf. Dieser ist im Bereich des Deckel-Kragens 34 vorhanden und hat die Form einer umlaufenden Rippe, die im Querschnitt ungefähr V-förmig ist. Auf der Rückseite (nach der Kapselherstellung als auf der Aussenseite) bildet sich dementsprechend eine umlaufende Nut 11.

Der Deckel-Kragen und der Kapsel-Kragen sind im Vergleich zum Endprodukt überdimensioniert, d.h. sie bilden je einen seitlichen Überstand aus, der bei oder nach der Befestigung des Deckels am Grundkörper abgetrennt wird. d.

In Fig. 4 ist ausserdem am Überstand ein abgesetzter Bereich vorhanden, so dass eine Schulter 32 gebildet wird. Die Schulter kann als Hilfe bei der Positionierung relativ zum Grundkörper dienen.

Kapseln, Grundkörper und Deckel der in Figuren 1-4 gezeichneten Art sind auch schon aus dem Stand der Technik bekannt, beispielsweise aus der WO 2015/096990.

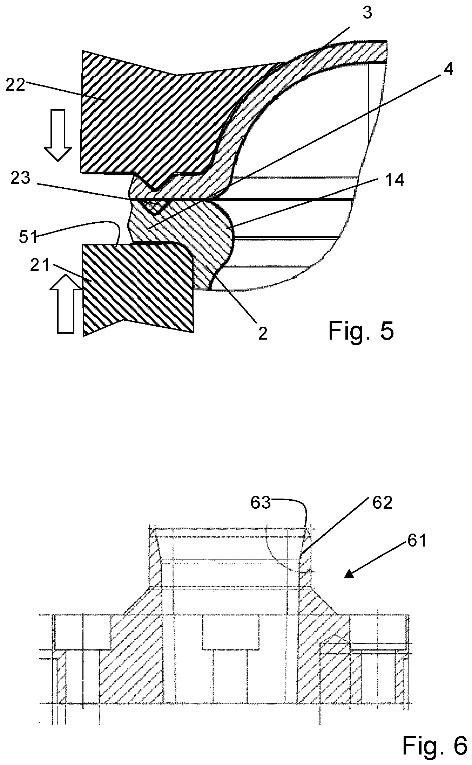

**Figur 5** illustriert schematisch den Schritt des Verschweissens des Deckels 3 mit dem Grundkörper 2, wobei nicht der ganze Kragen 4 dargestellt ist. Beim Verschliessen der Kapsel wird der Grundkörper-Kragen von unten durch einen ersten Amboss 21 abgestützt. Der erste Amboss 21 weist eine becherartige, auf den Grundkörper 2 abgestimmte Form, mit einem Innendurchmesser, der ungefähr dem Aussendurchmesser des Grundkörpers 2 entspricht. Oberseitig - quasi am Rand des Bechers - weist er eine im Wesentlichen flache Stützfläche 51 auf. Durch diese Form stützt der erste Amboss den Grundkörper, während der Deckel 3 platziert ist. Von oben koppelt eine erste Sonotrode (Schweiss-Sonotrode) 22 Ultraschallenergie in den Deckelkragen ein, so dass ein Verschweissen stattfindet. Der mit Kreuzschraffur dargestellte Bereich illustriert die ursprüngliche Position des Energierichtungsgebers 23; in Realität sind nach dem Verschliessen der Grundköperkragen und der Deckelkragen auch neben diesem Bereich miteinander verschweisst.

In Fig. 5 sieht man ausserdem eine optionale Verdickung 14 im Übergang zwischen der umlaufenden Seitenwand und dem Grundkörper-Kragen 41. Eine solche Verdickung dient der zusätzlichen Versteifung.

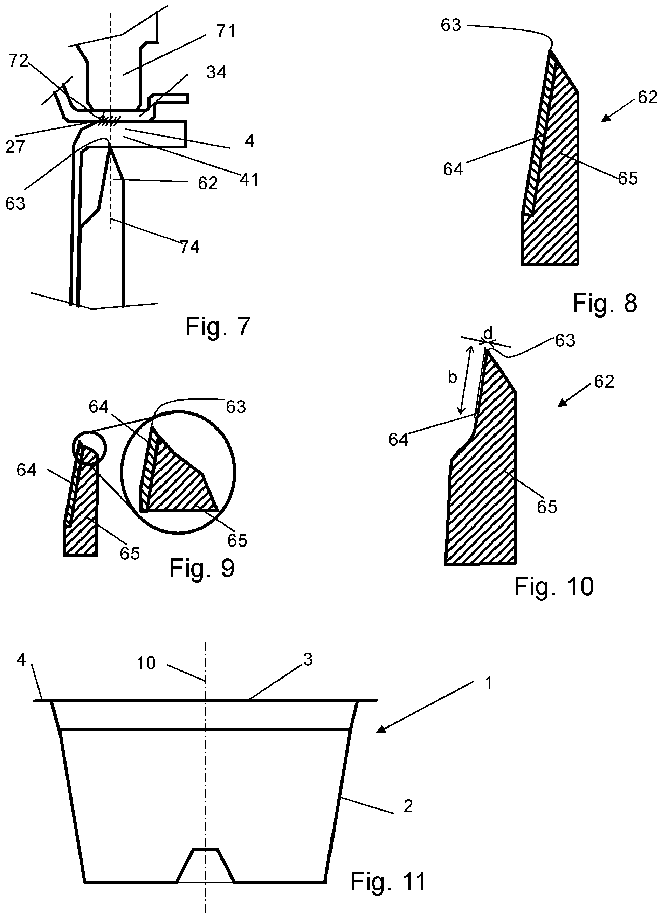

In einem nächsten Schritt wird der Überstand des Kragens 4, welcher aus dem Grundkörper-Kragen 41 und dem damit verschweissten Deckel-Kragen 34 gebildet wird, abgetrennt. Zu diesem Zweck wird die Kapsel in einem in **Figur 6** im Schnitt abgebildeten zweiten Amboss 61 platziert, welcher ähnlich dem ersten Amboss 61 eine becherartige, auf den Grundkörper 2 abgestimmte Form hat, mit auf diesen abgestimmten Massen. Im Unterschied zum ersten Amboss bildet der ober Rand keine Stützfläche, sondern eine Klinge 62 mit einer Schneidkante 63. Wie in **Figur 7** illustriert, presst eine schwingende zweite Sonotrode (Abtrenn-Sonotrode) 71 den Kragen 4 (mit Grundkörper-Kragen 41 und Deckel-Kragen 34 die mittels Verschweissung 27 miteinander verbunden sind) gegen die ruhende Klinge 62, bis der Kragen an der horizontalen Position der Schneidkante (gestrichelte Trennlinie 74) durchtrennt ist. Die nach unten gerichtete Auskoppelfläche 72 der Sonotrode ist dabei mindestens an der horizontalen Position 74 (Position in der Ebene senkrecht zur Achse 10; die Achse ist während des Verfahrens lotrecht ausgerichtet) flächig und senkrecht zur Achse, also parallel zum Deckel-Kragen 34, auf dem sie aufliegt.

Diese horizontale Position 74 entspricht dabei einer horizontalen Position der Verschweissung 27, d.h. die Klinge durchdringt während des Abtrennvorgangs die Verschweissung 27 und also den Bereich des Kragens 4, der verschweisst ist. Die Wirkung des Ultraschalls ist dabei eine doppelte: erstens erleichtert der Ultraschall den Abtrennvorgang, indem mechanisch das Eindringen der Klinge ins Material des Grundkörpers und anschliessend des Deckels erleichtert, und auch indem er eine lokale Erwärmung und damit Erweichung des Materials erwirkt. Zweitens bewirkt der Ultraschall durch diese lokale Erwärmung und Erweichung auch eine Versiegelung der Verschweissung 27 zur Seite hin.

Auch wenn dieser ultraschallinduzierte Trennvorgang die umlaufende Klinge 62 im Vergleich zu einem Stanzvorgang schont, hat es sich doch herausgestellt, dass die Klinge 62 trotzdem beansprucht wird. Um zu verhindern, dass die umlaufende Klinge - die eine relativ aufwändige Form hat - zu oft ausgewechselt werden muss, schlägt die vorliegende Erfindung vor, sie mehrschichtig auszugestalten, mit Schichten, die unterschiedliche Härten aufweisen. Ein Beispiel ist in **Figur 8** dargestellt. Die Klinge 62 weist einen Klingenkörper 65 aus einem ersten Material auf, welcher Klingenkörper den zweiten Bereich bildet. Auf dem Klingenkörper 65 ist einseitig eine Beschichtung 64 aus einem zweiten, härteren Material aufgebracht. Diese Beschichtung 64 bildet den ersten Bereich.

Im dargestellten Beispiel besteht der Klingenkörper 65 aus einem Hartmetall, bspw. aus einem Stahl, bspw. aus einem HSS mit 65 HRC (Rockwell-Härte; Skala C). Die Beschichtung 64, welche auch die Klingenschneide 63 bildet, ist im dargestellten Beispiel eine Keramikbeschichtung, zum Beispiel Wolframkarbid mit 71 HRC. Alternative Materialien sind Hartmetalle auf Wolframcarbid-Basis, bspw. ein Wolframcarbid-Kobalt-Hartmetall oder ein Wolframcarbid-Hartmetall basierend mit Ti, Ta, oder Nb-Matrix oder Hartmetalle nicht auf Wolframcarbid-Basis, bspw. sogenannte Cermets.

Das Auftragen einer Beschichtung der gezeichneten Art kann bspw. in Form eines flüssigen Keramik-Beschichtungslacks oder durch Sprühen erfolgt sein.

Die Wirkung des Aufbaus mit den zwei Bereichen ist **Figur 9** illustriert. Wenn Material der Klinge 62 an der Schneidkante 63 abgetragen wird, geschieht aufgrund der geringeren Härte ein noch grösserer Abtrag im zweiten Bereich 65. Daher wird die Klinge an der Schneidkante nie dicker als die Dicke der Beschichtung - ein selbstschärfender Effekt.

Die Härte der Sonotrode - mindestens im Bereich der Auskoppel-Fläche 72 kann - bspw. durch eine geeignete Beschichtung - grösser sein als die Härte des ersten Bereichs 64, d.h. die Sonotrode ist noch härter als die Klinge im Bereich der Schneidkante.

**Figur 10** zeigt eine alternative Klinge 60, bei welcher der erste Bereich 64 als dünne Beschichtung des zweiten Bereichs 65 bloss im vordersten Bereich zur Schneidekante 63 hin ausgebildet ist. Die Dicke d des ersten Bereichs kann insbesondere weniger als 30 µm betragen. Die Breite b (Ausdehnung entlang der Klingenebene von der Schneidekante 63 weg) kann bspw. relativ gering sein, bspw. 0.5 mm-15 mm oder 1-10 mm. Durch eine geringe Breite b von bspw. weniger als 5 mm, insbesondere weniger als 3 mm kann insbesondere bewirkt werden, dass relativ wenig Material für das Bilden des ersten Bereichs ausreicht.

Die vorliegende Erfindung eignet sich besonders gut für die Herstellung von Kapseln der in Fig. 1 gezeichneten Form, da diese erstens nach dem Vorgang des Abtrennens einen relativ klein Dimensionierten Kapsel-Kragen (4) aufweisen und zweitens ein relativ komplex geformtes Abtrennwerkzeug erforderlich machen. Das Verfahren ist aber auch geeignet für die Herstellung von Kapseln in eher konventionellen Kapsel-Formen, bspw. der in **Figur 11** dargestellten Form, bei welcher der Grundkörper 2 und mindestens am Ende des Herstellungsvorgangs auch der Kapseldeckel 3 um die Achse im Wesentlichen rotationssymmetrisch (kreissymmetrisch, d.h. bezüglich Rotation um beliebige Winkel symmetrisch) ausgebildet sind.

## Patentansprüche

1. Verfahren zum Herstellen einer mit einem Extraktionsgut gefüllten Portionenkapsel (1) für die Herstellung eines Brüherzeugnisses, aufweisend die folgenden Schritte:
- Zur-Verfügung-stellen eines Grundkörpers (2) aus einem Kunststoff, mit einem Bodenbereich (5), einer umlaufenden Seitenwand (6) und einem an die umlaufende Seitenwand anschliessenden umlaufenden Grundkörper-Kragen (41);
- Zur-Verfügung-stellen eines Deckels (3), mit einem Deckel-Kragen (34), aus einem Kunststoff;
- Befüllen des Grundkörpers (2) mit einem Extraktionsgut;
- Befestigen des Deckel-Kragens (34) am Grundkörper-Kragen (41), wodurch ein Kapsel-Kragen (4) entsteht; und
- Abtrennen einer eine äussere Partie des Kapsel-Kragens (4);
**dadurch gekennzeichnet,**
**dass** das Abtrennen der äusseren Partie unter Verwendung eines Abtrennwerkzeugs (61) mit entlang des Kapsel-Kragens umlaufender Klinge (62) mit Schneidekante (63) bewirkt wird, wobei die Klinge (62) einen ersten Bereich (64) aus einem ersten Material sowie einen zweiten Bereich (65) aus einem zweiten Material aufweist, wobei sich der erste Bereich bis zur Schneidekante (63) erstreckt, und, wobei das erste Material härter ist als das zweite Material.

2. Verfahren nach Anspruch 1, wobei das Abtrennwerkzeug (61) als Abtrenn-Amboss ausgebildet ist, welcher die Klinge (62) aufweist und den Kapsel-Kragen (4) während des Abtrennens stützt, wobei während des Abtrennens eine vibrierende Abtrenn-Sonotrode (71) den Kapsel-Kragen (4) gegen die Klinge (62) drückt.

3. Verfahren nach Anspruch 2, wobei die Abtrenn-Sonotrode (71) eine ebene Auskoppelfläche (72) aufweist.

4. Verfahren nach Anspruch 2 oder 3, wobei die Abtrenn-Sonotrode (71) eine Auskoppelfläche (72) aufweist, die während des Abtrennens gegen den Kapsel-Kragen (4) gedrückt wird, wobei das Verfahren so durchgeführt wird, dass die Abtrenn-Sonotrode (71) die Klinge (62) in keinem Moment ganz berührt..

5. Verfahren nach einem der vorangehenden Ansprüche, wobei der erste Bereich (64) durch eine einseitige Beschichtung des zweiten Bereichs (65) gebildet wird.

6. Verfahren nach einem der vorangehenden Ansprüche, wobei der Schritt des Befestigens des Deckel-Kragens (34) am Grundkörper-Kragen (41) durch Ultraschallschweissen geschieht.

7. Verfahren nach Anspruch 6, wobei für das Ultraschallschweissen ein Schweiss-Amboss (21) und eine Schweiss-Sonotrode (22) verwendet werden, wobei der Schweiss-Amboss (21) den Grundkörper-Kragen (41) während des Befestigens stützt, wobei der Schweiss-Amboss während des Befestigens ruht, und wobei während des Befestigens die Schweiss-Sonotrode vibriert und den Deckel-Kragen (34) gegen den vom Schweiss-Amboss (21) gestützten Grundkörper-Kragen (41) drückt.

8. Verfahren nach Anspruch 7, wobei der Schweiss-Amboss (21) eine ebene Stützfläche (51) aufweist, und wobei die Schweiss-Sonotrode einen umlaufenden Energierichtungsgeber aufweist oder umgekehrt der Schweiss-Amboss einen umlaufenden Energierichtungsgeber aufweist und die Schweiss-Sonotrode eine flächige Auskoppelfläche aufweist.

9. Einrichtung zur Durchführung des Verfahrens nach einem der vorangehenden Ansprüche, aufweisend eine Befestigungsvorrichtung zum Befestigen des Deckel-Kragens (34) am Grundkörper-Kragen (41) sowie ein Abtrennwerkzeugs (61) mit umlaufender Klinge (62) mit Schneidekante (63), wobei die Klinge (62) einen ersten Bereich (64) aus einem ersten Material sowie einen zweiten Bereich (65) aus einem zweiten Material aufweist, wobei der erste Bereich die Schneidekante (63) bildet, und, wobei das erste Material härter ist als das zweite Material.

10. Einrichtung nach Anspruch 9, ausserdem aufweisend eine Befüllvorrichtung zum Befüllen des Grundkörpers mit dem Extraktionsgut.

11. Einrichtung nach Anspruch 9 oder 10, wobei die Befestigungsvorrichtung eine Ultraschall-Schweissvorrichtung ist.
